# EUROPEAN PATENT SPECIFICATION

(11) **EP 1 790 556 B1**
(45) Date of publication and mention of the grant of the patent: **29.10.2008**
(21) Application number: 06024221.1
(22) Date of filing: 22.11.2006
(51) Int. Cl.: B62J 6/02, B62J 6/00

(54) **Headlamp for bicycle**
Scheinwerfer für ein Fahrrad
Lampe avant de bicyclette

(30) Priority: 25.11.2005 JP 2005340350
(43) Date of publication of application: 30.05.2007
(73) Proprietor: CATEYE CO., LTD., Osaka-shi, Osaka 546-0041 (JP)
(72) Inventor: Fujimoto, Takuya, c/o CATEYE CO., LTD., Osaka-shi Osaka 546-0041 (JP); Nakade, Hiroshi, c/o CATEYE CO., LTD., Osaka-shi Osaka 546-0041 (JP)
(74) Representative: Hofer, Dorothea

(56) References cited:
- US-A1- 5 561 414
- US-A1- 5 806 960

## Description

### BACKGROUND OF THE INVENTION

### Field of the Invention

The present invention relates to a headlamp for a bicycle, and more particularly, to a headlamp for a bicycle having a vibration detection unit detecting vibration.

### Description of the Background Art

Conventionally, a headlamp for a bicycle having a solar battery and a secondary battery has been known (for example in Japanese Registered Utility Model No. 02-026089).

Further, a lighting display apparatus having a solar battery and a polyacene battery in combination is described in Japanese Patent Laying-Open No. 2003-303501.

Furthermore, a solar battery apparatus having a solar battery and an electric double layer capacitor in combination is described in Japanese Patent Laying-Open No. 07-177683.

The headlamp for a bicycle disclosed in Japanese Registered Utility Model No. 02-026089 is provided with a vibration sensor for detecting vibration and automatically switching on or off the headlamp.

U.S. patent document US-A-5,561,414 discloses also such a headlamp comprising a vibration sensor with a metal spring leaf.

From the viewpoint of manufacturing an inexpensive and small-sized headlamp, it is preferable to use a vibration sensor having a coil spring and a conductive wire provided therethrough (that is, a helical spring type vibration sensor).

A helical spring type vibration sensor, however, may not be capable of accurately detecting vibration caused when a bicycle is moving, depending on the state of installation. As a result, it may not be capable of switching on or off the headlamp in an appropriate manner.

### SUMMARY OF THE INVENTION

One object of the present invention is to provide a headlamp for a bicycle capable of lighting on or blinking when the bicycle is moving and lighting off when the bicycle is not moving in an appropriate manner.

The invention is defined in claim 1 and in claim 5, the preamble of said claims described technical features disclosed in the prior art disclosure US-A-5,561,414.

A headlamp for a bicycle in accordance with one aspect of the present invention includes a light emitting element, a power supply unit supplying electric power to the light emitting element, a vibration detection unit detecting vibration, and a switch mechanism providing ON-OFF control of electrical connection between the light emitting element and the power supply unit in response to a result detected by the vibration detection unit. The vibration detection unit has a coil spring and a conductive wire passing through the coil spring, and the coil spring and the conductive wire are disposed to extend in a direction obliquely intersecting with a horizontal direction and a vertical direction when the headlamp is attached to the bicycle.

With the above structure, the vibration detection unit extends in an oblique direction, and thus vibration detection sensitivity in the vertical direction is improved. Consequently, the headlamp can light on or blink when the bicycle is moving and light off when the bicycle is not moving in an appropriate manner.

Preferably, in the headlamp for a bicycle described above, when the headlamp is attached to the bicycle, the vibration detection unit is disposed to extend in a direction along a bar on which the headlamp is attached, when projected on a horizontal plane.

When the headlamp is attached on the bar, the headlamp can be attached stably at a predetermined angle about an axis in a direction orthogonal to the bar. Consequently, with the above structure, the direction of the vibration detection unit can stably be set at an oblique direction.

A headlamp for a bicycle in accordance with another aspect of the present invention includes a light emitting element, a power supply unit supplying electric power to the light emitting element, a vibration detection unit detecting vibration, a switch mechanism providing ON-OFF control of electrical connection between the light emitting element and the power supply unit in response to a result detected by the vibration detection unit, and a circuit board on which the vibration detection unit is mounted. The vibration detection unit has a coil spring and a conductive wire passing through the coil spring, and the coil spring and the conductive wire are disposed to extend in a direction obliquely intersecting with a direction in which the circuit board extends and a direction orthogonal to the circuit board.

Also in this aspect, the vibration detection unit extends in an oblique direction, and thus vibration detection sensitivity in a direction vertical to the circuit board is improved.

Preferably, in the headlamp for a bicycle described above, the power supply unit includes a solar battery and an electrical storage mechanism, and the solar battery is mounted on the circuit board.

From the viewpoint of efficiently obtaining electromotive force generated by the solar battery, the circuit board is disposed to be directed in the horizontal direction when the headlamp is attached to the bicycle. Consequently, with the above structure, vibration detection sensitivity in the vertical direction can reliably be improved.

Preferably, in the headlamp for a bicycle described above, the electrical storage mechanism includes an electric double layer capacitor or a polyacene capacitor.

Thereby, an electric storage mechanism having a capacity sufficient for a headlamp for a bicycle can be achieved.

Preferably, the headlamp for a bicycle described above further includes an illuminance detection unit detecting ambient illuminance, and the switch mechanism provides ON-OFF control of electrical connection between the light emitting element and the power supply unit in response to a result detected by the vibration detection unit and a result detected by the illuminance detection unit. Thereby, a headlamp automatically lighting off when the ambient illuminance is high can be achieved.

Preferably, in the headlamp for a bicycle described above, the switch mechanism establishes electrical connection between the light emitting element and the power supply unit in response to the vibration detection unit detecting that the vibration continues for a predetermined period of time and the illuminance detection unit detecting that the ambient illuminance is not more than a predetermined illuminance. Thereby, automatic switching between lighting on or blinking and lighting off of the headlamp can be performed in an appropriate manner.

According to the present invention, a headlamp for a bicycle capable of lighting on or blinking when the bicycle is moving and lighting off when the bicycle is not moving in an appropriate manner as described above can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view showing a structure of a headlamp for a bicycle in accordance with a first embodiment of the present invention.
Fig. 2 is a side view of the headlamp for a bicycle in accordance with the first embodiment of the present invention.
Fig. 3 is a view of the headlamp for a bicycle shown in Fig. 2 seen from a direction indicated by an arrow III.
Fig. 4 is a view of the headlamp for a bicycle shown in Fig. 2 seen from a direction indicated by an arrow IV.
Fig. 5 is a view of the headlamp for a bicycle shown in Fig. 2 seen from a direction indicated by an arrow V
Fig. 6 is a cross sectional view taken along a line VI-VI in Fig. 3.
Fig. 7 is a cross sectional view taken along a line VII-VII in Fig. 4.
Fig. 8 is a cross sectional view taken along a line VIII-VIII in Fig. 4.
Fig. 9 is a cross sectional view taken along a line IX-IX in Fig. 2.
Fig. 10 is a cross sectional view taken along a line X-X in Fig. 9.
Fig. 11 is a cross sectional view showing a vibration sensor mounted in the headlamp for a bicycle shown in Figs. 1 to 10.
Figs. 12 to 14 are views showing a circuit board and components mounted on the circuit board in the headlamp for a bicycle shown in Figs. 1 to 10.
Fig. 15 is a view showing a structure of a headlamp for a bicycle in accordance with a second embodiment of the present invention.

### DESCRIPTION OF THE PREFERRED EMBODIMENTS

Hereinafter, embodiments of a headlamp for a bicycle in accordance with the present invention will be described. It is to be noted that identical or corresponding parts will be designated by the same reference numerals, and the description thereof may not be repeated.

### First Embodiment

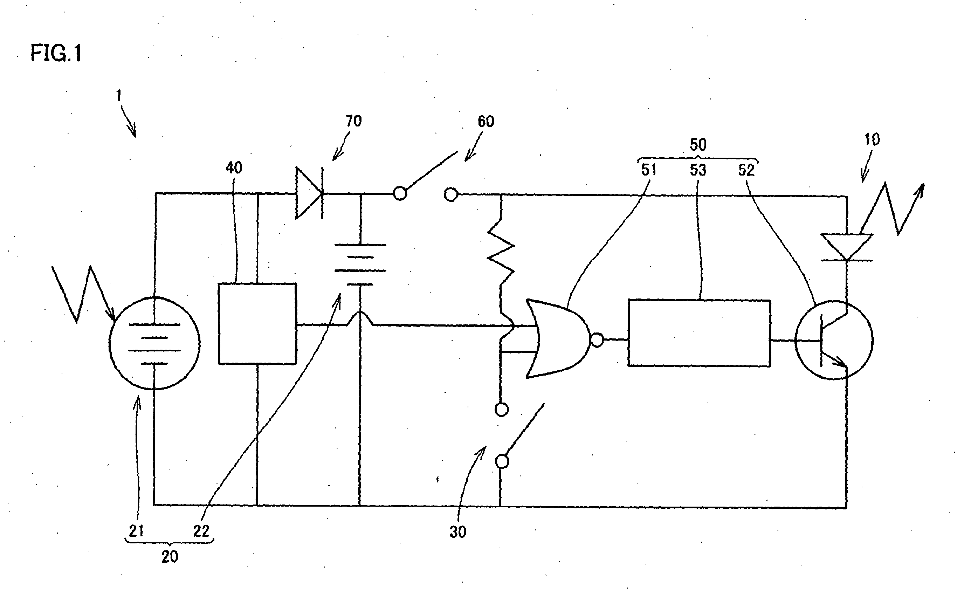

Fig. 1 is a view showing a structure of a headlamp for a bicycle in accordance with a first embodiment of the present invention. Referring to Fig. 1, a headlamp 1 for a bicycle in accordance with the present embodiment includes an LED element 10, a power supply device 20 supplying electric power to LED element 10, a vibration sensor 30 detecting vibration, an illuminance detector 40 detecting ambient illuminance, a switching device 50, an ON/OFF switch 60, and a current backflow preventing diode 70.

LED element 10 is connected to power supply device 20 via ON/OFF switch 60 and current backflow preventing diode 70. Power supply device 20 includes a solar battery 21 and an electrical storage mechanism 22. Solar battery 21 converts solar energy into electrical energy by utilizing photovoltaic effect of a semiconductor. Electrical storage mechanism 22 stores electric power generated by solar battery 21. Examples of electrical storage mechanism 22 include a secondary battery, and a high-capacity capacitor such as an electric double layer capacitor or a polyacene capacitor.

Vibration sensor 30 detects vibration of a bicycle to determine whether or not the bicycle is moving. Illuminance detector 40 detects ambient illuminance. In the present embodiment, ambient illuminance is detected by measuring the magnitude of electromotive force generated by solar battery 21.

Switching device 50 includes an NOR element 51, a bipolar transistor 52, and a monostable multivibrator 53. NOR element 51 has an input terminal connected to vibration sensor 30 and an input terminal connected to illuminance detector 40. Further, NOR element 51 has an output terminal connected to the base of bipolar transistor 52 via monostable multivibrator 53. Bipolar transistor 52 is disposed between LED element 10 and power supply device 20. Current flows between the collector and the emitter of bipolar transistor 52 only when vibration sensor 30 detects vibration and illuminance detector 40 detects that ambient illuminance is not more than a predetermined illuminance. Thereby, electric power is supplied from power supply device 20 to LED element 10, and thus LED element 10 lights on. In the manner described above, LED element 10 can automatically light on only when the bicycle is moving and the ambient illuminance is low.

When the headlamp is being used, ON/OFF switch 60 is always in an ON state. It is possible to stop using the headlamp by turning off ON/OFF switch 60.

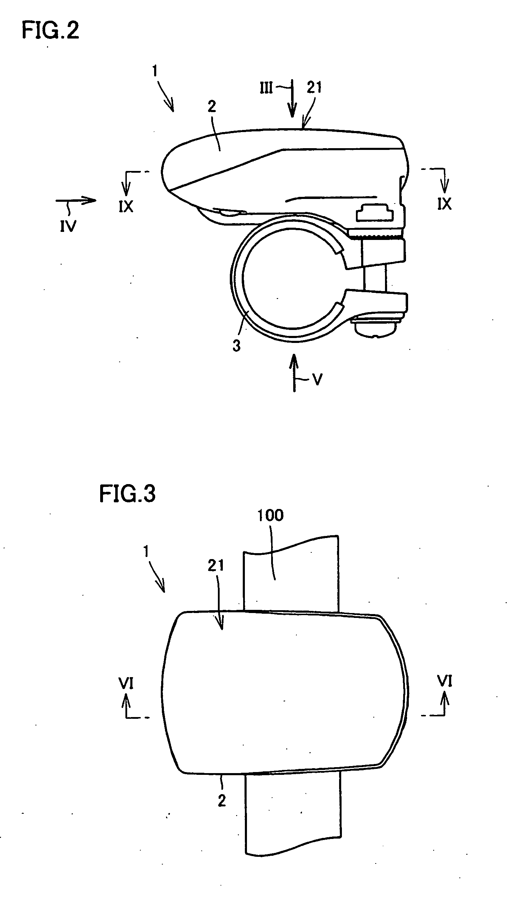

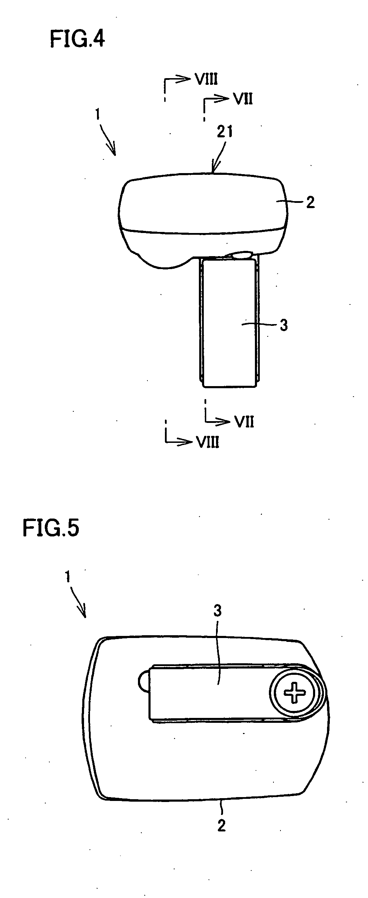

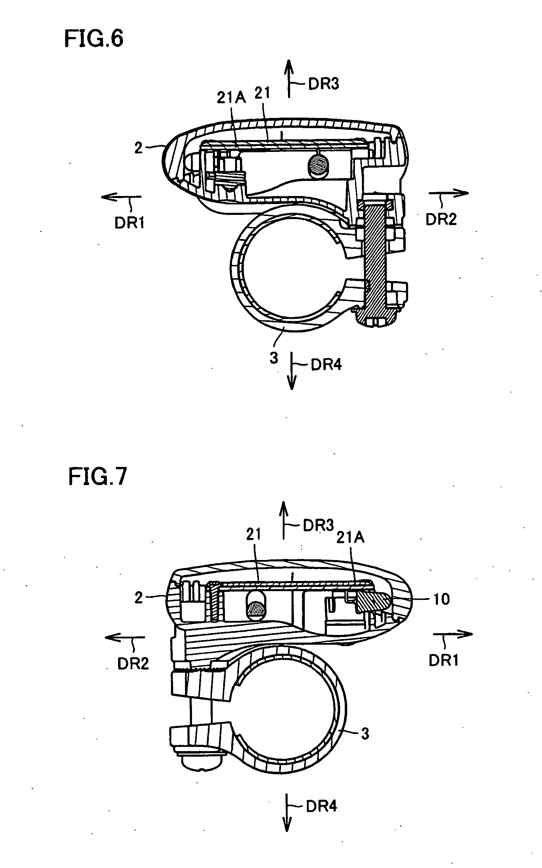

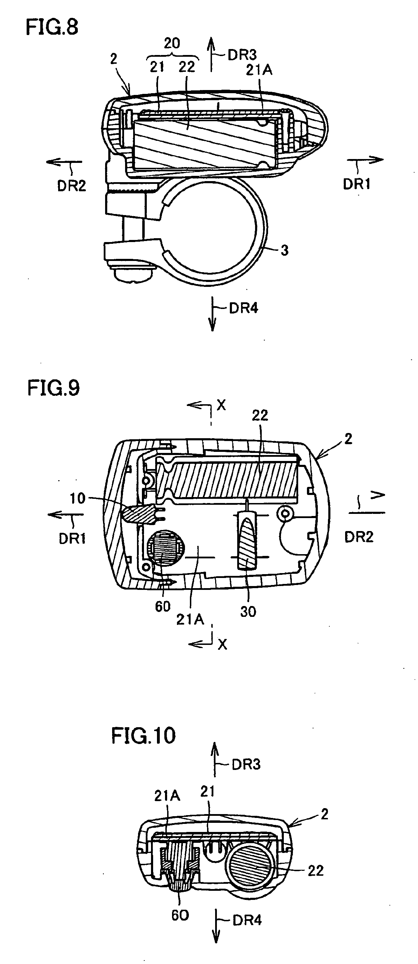

Fig. 2 is a side view of headlamp 1 for a bicycle. Further, Figs. 3 to 5 are views of headlamp 1 for a bicycle seen from directions indicated by an arrow III, an arrow IV, and an arrow V in Fig. 2, respectively. Furthermore, Figs. 6 to 10 are cross sectional views taken along a line VI-VI in Fig. 3, a line VII-VII in Fig. 4, a line VIII-VIII in Fig. 4, a line IX-IX in Fig. 2, and a line X-X in Fig. 9, respectively.

In Figs. 6 to 10, a direction indicated by an arrow DR1 corresponds to a "forward direction" when headlamp 1 for a bicycle is attached on a handle bar at an intended angle. Similarly, a direction indicated by an arrow DR2, a direction indicated by an arrow DR3, and a direction indicated by an arrow DR4 correspond to a "backward direction", an "upward direction", and a "downward direction", respectively, when headlamp 1 for a bicycle is attached on the handle bar at an intended angle.

Referring to Figs. 2 to 10, headlamp 1 for a bicycle includes a main body 2 and a bracket 3 as a "securing tool". To attach headlamp 1 for a bicycle on a handle bar 100 of the bicycle, handle bar 100 is passed through bracket 3. Solar battery 21 is disposed on an upper surface of a printed ciucuit board (PCB) 21A. PCB 21A is disposed to extend in a horizontal direction when headlamp 1 for a bicycle is attached on handle bar 100 at an intended angle. On a lower surface of PCB 21A, LED element 11, electrical storage mechanism 22, vibration sensor 30, and ON/OFF switch 60 are mounted. In this manner, headlamp 1 for a bicycle is provided in a compact structure.

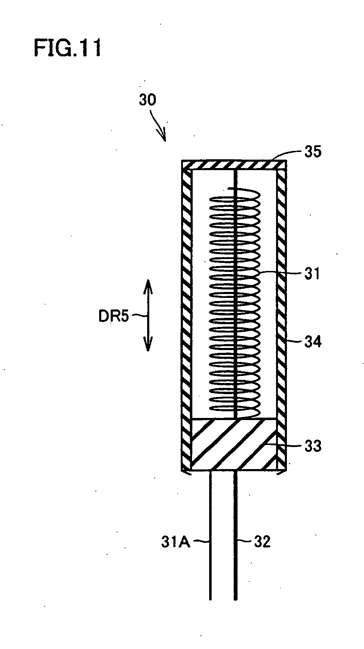

Fig. 11 is a cross sectional view showing vibration sensor 30. Referring to Fig. 11, vibration sensor 30 includes a helical spring 31 made of an elastic metal conductive wire 31A, a central metal conductive wire 32, a resin base 33, a resin exterior portion 34, and a resin lid 35. Resin base 33, resin exterior portion 34, and resin lid 35 constitute a "casing" for accommodating helical spring 31 and central metal conductive wire 32. When the bicycle is moving, helical spring 31 and central metal conductive wire 32 come into contact with each other as a result of vibration, and electrical connection is established therebetween. Thereby, the vibration is detected. Helical spring 31 is made for example of phosphor bronze having a diameter of about 0.15 mm. Central metal conductive wire 32 is made for example of bronze having a diameter of about 0.5 mm. Examples of such vibration sensor 30 include "SW-18010P" manufactured by Yusan Electric Co., Ltd.

A one-shot circuit for removing noise is connected to vibration sensor 30. Thereby, only vibration continuing for a predetermined period of time (for example, not less than about 45 seconds) is detected, and thus whether or not the bicycle is moving can be determined in an appropriate manner.

When the bicycle is moving, vibration in an upward and downward direction of the bicycle is stably and continuously caused, as compared to vibration in a forward and backward direction and in a width direction of the bicycle. Accordingly, by detecting the vibration in the upward and downward direction with high accuracy, whether or not the bicycle is moving can be determined more accurately, and ON/OFF control of headlamp 1 for the bicycle can be performed in an appropriate manner.

It has conventionally been known that vibration sensor 30 of the helical spring type described above is most insensitive to vibration in its longitudinal direction (a direction indicated by an arrow DR5). On the other hand, the direction of vibration to which vibration sensor 30 is most sensitive has conventionally been unknown. The inventors of the present invention have studied the matter and found that vibration sensor 30 of the helical spring type is most sensitive to vibration in a direction obliquely intersecting with its longitudinal direction and width direction.

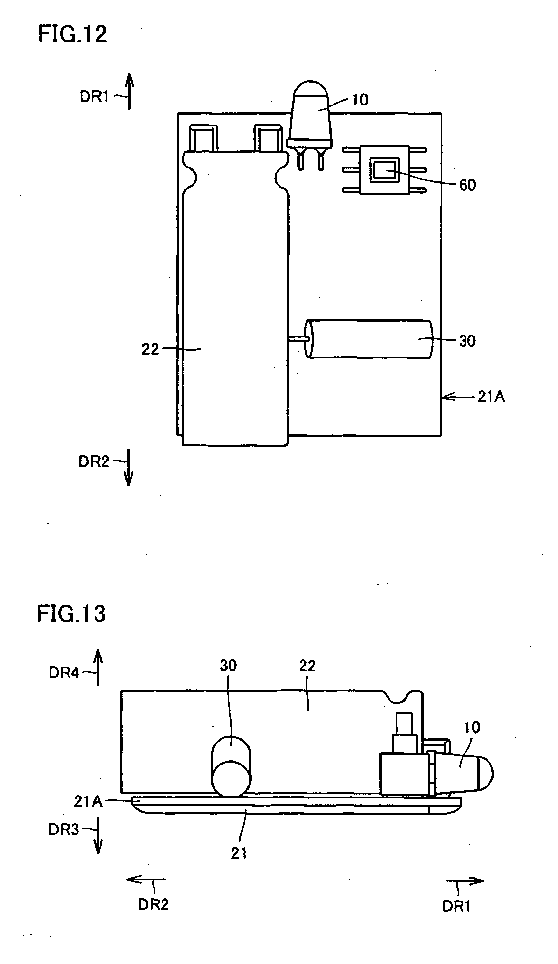

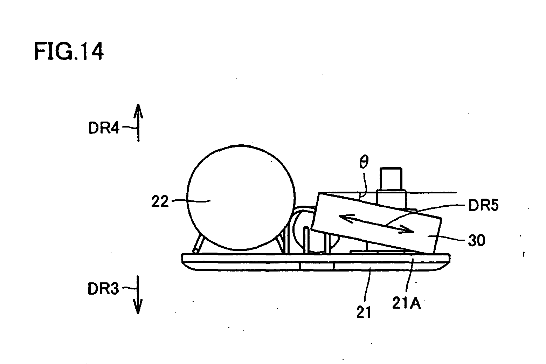

Figs. 12 to 14 are views showing PCB 21 A and components mounted on the PCB. Fig. 12 shows PCB 21 A seen from below, Fig. 13 shows PCB 21 A seen from the side, and Fig. 14 shows PCB 21A seen from the back.

Referring to Figs. 12 to 14, when projected on the lower surface of PCB 21A, vibration sensor 30 is disposed in a direction along handle bar 100 on which headlamp 1 for the bicycle is attached (a right and left direction in Figs. 12 and 14). Further, vibration sensor 30 is disposed to extend in a direction (indicated by arrow DR5) obliquely intersecting with a direction of a main surface of PCB 21A. Specifically, vibration sensor 30 is disposed to extend in a direction (indicated by arrow DR5) obliquely intersecting with a horizontal direction and a vertical direction when headlamp 1 for the bicycle is attached on handle bar 100 at an intended angle.

With this manner, the upward and downward direction obliquely intersects with the direction in which vibration sensor 30 extends (the direction indicated by arrow DR5). Accordingly, vibration in the upward and downward direction can be detected with high sensitivity. As a result, whether or not the bicycle is moving can be determined in an appropriate manner.

The inventors of the present invention have confirmed the effect described above by performing a process described below.

Firstly, PCB 21A shown in Figs 12 to 14 is placed on a vibration test apparatus to be vibrated in the upward and downward direction (the direction indicated by arrows DR3 and DR4). Six PCBs are tested, each vibrated with varying vibration intensities, and the vibration intensity (vibrational acceleration) at which LED element 10 starts lighting on is measured with an angle θ for mounting vibration sensor 30 changed (at 0°, 5°, 10°, and 15°). Table 1 shows the result obtained through the process described above.

**[Table 1]**

| Acceleration when the LED element starts lighting on (Unit: G) | | | | | |
|---|---|---|---|---|---|
| | | Angle (θ) for Mounting Sensor | | | |
| | | 0° | 5° | 10° | 15° |
| Sample No. | 1 | 1.07 | 1.12 | 0.78 | 0.74 |
| | 2 | 1.76 | 1.64 | 1.62 | 1.54 |
| | 3 | 2.73 | 2.20 | 2.00 | 1.97 |
| | 4 | 1.14 | 1.03 | 1.02 | 1.00 |
| | 5 | 1.38 | 1.48 | 1.30 | 1.19 |
| | 6 | 2.28 | 2.00 | 1.84 | 1.76 |
| Average | | 1.73 | 1.58 | 1.43 | 1.37 |

As shown in Table 1, LED element 10 lit on at the smallest acceleration when θ=15°. Thus, it has been found that vibration sensor 30 is more sensitive to the vibration in the upward and downward direction vertical to the ground when θ=15°. Consequently, in headlamp 1 for the bicycle in accordance with the present embodiment, angle θ is set at 15°. When there is a change in the specifications of vibration sensor 30, angle θ for mounting the sensor is altered as appropriate.

To summarize the above, headlamp 1 for a bicycle in accordance with the present embodiment includes LED element 10 as a "light emitting element", power supply device 20 as a "power supply unit" supplying electric power to LED element 10, vibration sensor 30 as a "vibration detection unit" detecting vibration, illuminance detector 40 as a "illuminance detection unit" detecting ambient illuminance, and switching device 50 as a "switch mechanism" providing ON-OFF control of electrical connection between LED element 10 and power supply device 20. Vibration sensor 30 includes helical spring 31 as a "coil spring", and central metal conductive wire 32 as a "conductive wire" passing through helical spring 31. Helical spring 31 and central metal conductive wire 32 are disposed to extend in a direction (indicated by arrow DR5) obliquely intersecting with the horizontal direction and the vertical direction when the headlamp is attached to the bicycle.

In other words, helical spring 31 and central metal conductive wire 32 are disposed to extend in a direction (indicated by arrow DR5) obliquely intersecting with a direction in which PCB 21A as a "circuit board" on which vibration sensor 30 is mounted extends and a direction orthogonal to PCB 21A.

Switching device 50 establishes electrical connection between LED element 10 and power supply device 20, more specifically, in response to vibration sensor 30 detecting that vibration continues for a predetermined period of time and illuminance detector 40 detecting that ambient illuminance is not more than a predetermined illuminance.

With the above structure, vibration sensor 30 extends in an oblique direction, and thus vibration detection sensitivity is improved. Consequently, the headlamp can light on or blink when the bicycle is moving and light off when the bicycle is not moving in an appropriate manner.

It is to be noted that the operation of switching device 50 is not limited to that described above. For example, illuminance detector 40 may not be mounted, and switching device 50 may establish electrical connection between LED element 10 and power supply device 20 only in response to vibration sensor 30 detecting that vibration continues for a predetermined period of time.

In headlamp 1 for the bicycle, when the headlamp is attached to the bicycle, vibration sensor 30 is disposed to extend in a direction along handle bar 100 when projected on a horizontal plane.

When headlamp 1 is attached on handle bar 100, headlamp 1 can be attached stably at a predetermined angle about an axis in a direction orthogonal to handle bar 100. Consequently, with the above structure, the direction of vibration sensor 30 can stably be set at an oblique direction.

The direction in which vibration sensor 30 is mounted is not limited to that described above. For example, when the headlamp is attached, vibration sensor 30 may be disposed to extend in the forward and backward direction of the bicycle when projected on a horizontal plane.

Power supply device 20 includes solar battery 21 and electrical storage mechanism 22. Solar battery 21 is mounted on PCB 21A.

From the viewpoint of efficiently obtaining electromotive force generated by solar battery 21, PCB 21A is disposed to be directed in the horizontal direction when the headlamp is attached to the bicycle. Consequently, with the above structure, vibration detection sensitivity can reliably be improved.

The "bicycle" on which the headlamp in accordance with the present embodiment is attached is typically a two-wheeler, and it may for example be a tricycle. Further, the headlamp may be attached on handle bar 100 as described above, and may be attached on a shaft.

### Second Embodiment

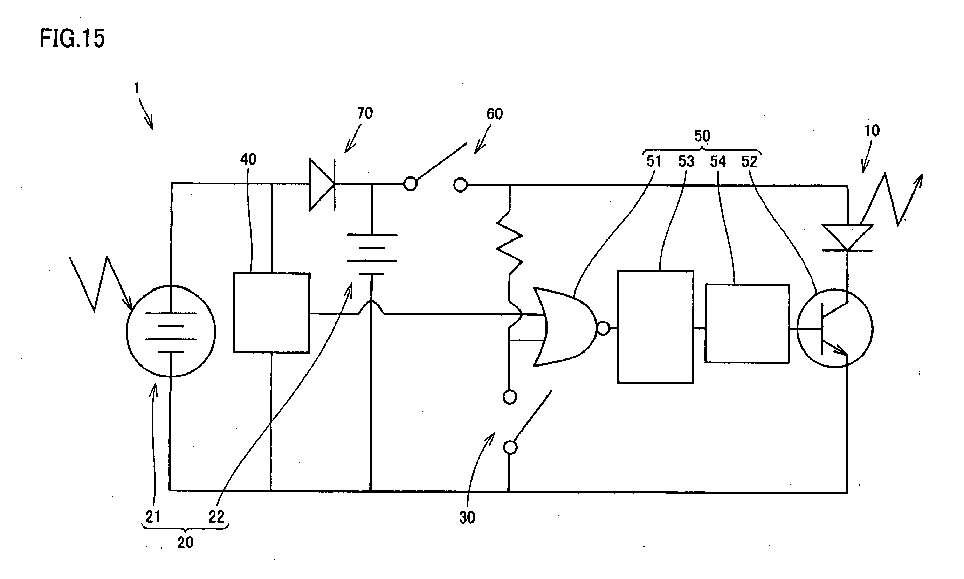

Fig. 15 is a view showing a structure of a headlamp for a bicycle in accordance with a second embodiment. Referring to Fig. 15, the headlamp for a bicycle in accordance with the present embodiment is a modification of the headlamp for a bicycle in accordance with the first embodiment, and it includes LED element 10, power supply device 20, vibration sensor 30, illuminance detector 40, switching device 50, ON/OFF switch 60, and current backflow preventing diode 70, as in the first embodiment.

In the present embodiment, in switching device 50, monostable multivibrator 53 and a multivibrator 54 are disposed between NOR element 51 and bipolar transistor 52. This allows LED element 10 to automatically blink (instead of lighting on in the first embodiment) only when the bicycle is moving and the ambient illuminance is low. To let people in a surrounding area notice the presence of the moving bicycle, blinking seems to be preferable to lighting on.

Although the embodiments of the present invention have been described, it is intended from the beginning to combine features of each embodiment described above as appropriate.

Although the present invention has been described and illustrated in detail, it is clearly understood that the same is by way of illustration and example only and is not to be taken by way of limitation, the present invention being limited only by the terms of the appended claims.

## Claims

1. A headlamp for a bicycle, comprising:
a light emitting element (10);
a power supply unit (20) supplying electric power to said light emitting element (10);
a vibration detection unit (30) detecting vibration; and
a switch mechanism (50) providing ON-OFF control of electrical connection between said light emitting element (10) and said power supply unit (20) in response to a result detected by said vibration detection unit (30),
**characterised in that** said vibration detection unit (30) has a coil spring (31) and a conductive wire (32) passing through the coil spring (31), and
said coil spring (31) and said conductive wire (32) are disposed to extend in a direction obliquely intersecting with a horizontal direction and a vertical direction when the headlamp is attached to said bicycle.

2. The headlamp for a bicycle according to claim 1,
wherein, when said headlamp is attached to said bicycle, said vibration detection unit (30) is disposed to extend in a direction along a bar (100) on which said headlamp is attached, when projected on a horizontal plane.

3. The headlamp for a bicycle according to claim 1 or 2, further comprising an illuminance detection unit (40) detecting ambient illuminance,
wherein said switch mechanism (50) provides ON-OFF control of electrical connection between said light emitting element (10) and said power supply unit (20) in response to a result detected by said vibration detection unit (30) and a result detected by said illuminance detection unit (40).

4. The headlamp for a bicycle according to claim 3,
wherein said switch mechanism (50) establishes electrical connection between said light emitting element(10) and said power supply unit (20) in response to said vibration detection unit (30) detecting that the vibration continues for a predetermined period of time and said illuminance detection unit (40) detecting that the ambient illuminance is not more than a predetermined illuminance.

5. A headlamp for a bicycle, comprising:
a light emitting element (10);
a power supply unit (20) supplying electric power to said light emitting element (10);
a vibration detection unit (30) detecting vibration;
a switch mechanism (50) providing ON-OFF control of electrical connection between said light emitting element (10) and said power supply unit (20) in response to a result detected by said vibration detection unit (30); and
a circuit board (21A) on which said vibration detection unit (30) is mounted,
**characterised in that** said vibration detection unit (30) has a coil spring (31) and a conductive wire (32) passing through the coil spring (31), and
said coil spring (31) and said conductive wire (32) are disposed to extend in a direction obliquely intersecting with a direction in which said circuit board (21A) extends and a direction orthogonal to said circuit board (21 A).

6. The headlamp for a bicycle according to claim 5,
wherein said power supply unit (20) includes a solar battery (21) and an electrical storage mechanism (22), and
said solar battery (21) is mounted on said circuit board (21 A).

7. The headlamp for a bicycle according to claim 6,
wherein said electrical storage mechanism (22) includes an electric double layer capacitor or a polyacene capacitor.

8. The headlamp for a bicycle according to one of claims 5 to 7, further comprising an illuminance detection unit (40) detecting ambient illuminance,
wherein said switch mechanism (50) provides ON-OFF control of electrical connection between said light emitting element (10) and said power supply unit (20) in response to a result detected by said vibration detection unit (30) and a result detected by said illuminance detection unit (40).

9. The headlamp for a bicycle according to claim 8,
wherein said switch mechanism (50) establishes electrical connection between said light emitting element (10) and said power supply unit (20) in response to said vibration detection unit (30) detecting that the vibration continues for a predetermined period of time and said illuminance detection unit (40) detecting that the ambient illuminance is not more than a predetermined illuminance.

## Patentansprüche

1. Vorderlampe für ein Fahrrad, mit:
einem Licht aussendenden Element (10);
einer Stromversorgungseinheit (20), die das Licht aussendende Element (10) mit elektrischem Strom versorgt;
einer Schwingungserfassungseinheit (30), die Schwingungen erfasst; und
einem Schaltmechanismus (50), der eine Ein/Aus-Steuerung einer elektrischen Verbindung zwischen dem Licht aussendenden Element (10) und der Stromversorgungseinheit (20) als Reaktion auf ein durch die Schwingungserfassungseinheit (30) erfasstes Ergebnis vorsieht,
**dadurch gekennzeichnet, dass**
die Schwingungserfassungseinheit (30) eine Schraubenfeder (31) und einen Leitungsdraht (32) aufweist, der durch die Schraubenfeder (31) hindurch tritt, und
die Schraubenfeder (31) und der Leitungsdraht (32) so angeordnet sind, dass sie sich in einer Richtung erstrecken, die eine horizontale Richtung und eine vertikale Richtung schräg schneidet, wenn die Vorderlampe an dem Fahrrad angebracht ist.

2. Vorderlampe für ein Fahrrad gemäß Anspruch 1,
wobei, wenn die Vorderlampe an dem Fahrrad angebracht ist, die Schwingungserfassungseinheit (30) so angeordnet ist, dass sie sich bei Projektion der horizontalen Ebene in einer Richtung entlang eines Stabs (100) erstreckt, an dem die Vorderlampe angebracht ist.

3. Vorderlampe für ein Fahrrad gemäß Anspruch 1 oder 2,
des weiteren mit einer Helligkeitserfassungseinheit (40), die eine Umgebungshelligkeit erfasst,
wobei der Schaltmechanismus (50) eine Ein/Aus-Steuerung der elektrischen Verbindung zwischen dem Licht aussendenden Element (10) und der Stromversorgungseinheit (20) als Reaktion auf ein durch die Schwingungserfassungseinheit (30) erfasstes Ergebnis und ein durch die Helligkeitserfassungseinheit (40) erfasstes Ergebnis vorsieht.

4. Vorderlampe für ein Fahrrad gemäß Anspruch 3,
wobei der Schaltmechanismus (50) eine elektrische Verbindung zwischen dem Licht aussendenden Element (10) und der Stromversorgungseinheit (20) als Reaktion darauf, dass die Schwingungserfassungseinheit (30) erfasst, dass die Schwingungen in einer vorbestimmten Zeitperiode andauern, und als Reaktion darauf einrichtet, dass die Helligkeitserfassungseinheit (40) erfasst, dass die Umgebungshelligkeit nicht stärker als eine vorbestimmte Helligkeit ist.

5. Vorderlampe für ein Fahrrad, mit:
einem Licht aussendenden Element (10);
einer Stromversorgungseinheit (20), die das Licht aussendende Element (10) mit elektrischem Strom versorgt:
einer Schwingungserfassungseinheit (30), die Schwingungen erfasst;
einem Schaltmechanismus (50), der eine Ein/Aus-Steuerung einer elektrischen Verbindung zwischen dem Licht aussendenden Element (10) und der Stromversorgungseinheit (20) als Reaktion auf ein durch die Schwingungserfassungseinheit (30) erfasstes Ergebnis vorsieht; und
einer Leiterplatte (21A), an der die Schwingungserfassungseinheit (30) angebracht ist,
**dadurch gekennzeichnet, dass**
die Schwingungserfassungseinheit (30) eine Schraubenfeder (31) und einen Leitungsdraht (32) aufweist, der durch die Schraubenfeder (31) hindurch tritt, und
die Schraubenfeder (31) und der Leitungsdraht (32) so angeordnet sind, dass sie sich in einer Richtung erstrecken, die jene Richtung, in der sich die Leiterplatte (21A) erstreckt, und jene Richtung schräg schneidet, die orthogonal zu der Leiterplatte (21A) ist.

6. Vorderlampe für ein Fahrrad gemäß Anspruch 5,
wobei die Stromversorgungseinheit (20) eine Solarbatterie (21) und einen elektrischen Speichermechanismus (22) aufweist, und
die Solarbatterie (21) an der Leiterplatte (21A) angebracht ist.

7. Vorderlampe für ein Fahrrad gemäß Anspruch 6,
wobei der elektrische Speichermechanismus (22) einen doppellagigen, elektrischen Kondensator oder einen Polyacen-Kondensator aufweist.

8. Vorderlampe für ein Fahrrad gemäß einem der Ansprüche 5 bis 7, des weiteren
mit einer Helligkeitserfassungseinheit (40), die eine Umgebungshelligkeit erfasst,
wobei der Schaltmechanismus (50) eine Ein/Aus-Steuerung einer elektrischen Verbindung zwischen dem Licht aussendenden Element (10) und der Stromversorgungseinheit (20) als Reaktion auf ein durch die Schwingungserfassungseinheit (30) erfasstes Ergebnis und ein durch die Helligkeitserfassungseinheit (40) erfasstes Ergebnis vorsieht.

9. Vorderlampe für ein Fahrrad gemäß Anspruch 8,
wobei der Schaltmechanismus (50) eine elektrische Verbindung zwischen dem Licht aussendenden Element (10) und der Stromversorgungseinheit (20) als Reaktion darauf einrichtet, dass die Schwingungserfassungseinheit (30) erfasst, dass die Schwingungen in einer vorbestimmten Zeitperiode andauern, und darauf, dass die Helligkeitserfassungseinheit (40) erfasst, dass die Umgebungshelligkeit nicht stärker als eine vorbestimmte Helligkeit ist.

## Revendications

1. Feu avant pour une bicyclette, comprenant :
un élément luminescent (10) ;
une unité d'alimentation en énergie électrique (20) fournissant de l'énergie électrique audit élément luminescent (10) ;
une unité de détection de vibrations (30) détectant des vibrations ; et
un mécanisme de commutation (50) fournissant la commande de marche/arrêt de connexion électrique entre ledit élément luminescent (10) et ladite unité d'alimentation en énergie électrique (20) en réponse à un résultat détecté par ladite unité de détection de vibrations (30),
**caractérisé en ce que** ladite unité de détection de vibrations (30) possède un ressort hélicoïdal (31) et un fil conducteur (32) passant à travers le ressort hélicoïdal (31), et
ledit ressort hélicoïdal (31) et ledit fil conducteur (32) sont disposés pour s'étendre dans une direction croisant obliquement une direction horizontale et une direction verticale lorsque le feu avant est fixé à ladite bicyclette.

2. Feu avant pour une bicyclette selon la revendication 1,
dans lequel, lorsque ledit feu avant est fixé à ladite bicyclette, ladite unité de détection de vibrations (30) est disposée pour s'étendre dans une direction le long d'un guidon (100) sur lequel est fixé ledit feu avant, lorsqu'elle est en saillie sur un plan horizontal.

3. Feu avant pour une bicyclette selon la revendication 1 ou 2, comprenant en outre une unité de détection d'éclairement lumineux (40) détectant un éclairement lumineux ambiant,
dans lequel ledit mécanisme de commutation (50) fournit une commande de marche/arrêt de connexion électrique entre ledit élément luminescent (10) et ladite unité d'alimentation en énergie électrique (20) en réponse à un résultat détecté par ladite unité de détection de vibrations (30) et un résultat détecté par ladite unité de détection d'éclairement lumineux (40).

4. Feu avant pour une bicyclette selon la revendication 3,
dans lequel ledit mécanisme de commutation (50) établit une connexion électrique entre ledit élément luminescent(10) et ladite unité d'alimentation en énergie électrique (20) en réponse à ladite unité de détection de vibrations (30) détectant que les vibrations continuent pendant une période prédéterminée et ladite unité de détection d'éclairement lumineux (40) détectant que l'éclairement lumineux ambiant n'est pas supérieur à un éclairement lumineux prédéterminé.

5. Feu avant pour une bicyclette, comprenant :
un élément luminescent (10) ;
une unité d'alimentation en énergie électrique (20) fournissant de l'énergie électrique audit élément luminescent (10) ;
une unité de détection de vibrations (30) détectant des vibrations ;
un mécanisme de commutation (50) fournissant commande de marche-arrêt de connexion électrique entre ledit élément luminescent (10) et ladite unité d'alimentation en énergie électrique (20) en réponse à un résultat détecté par ladite unité de détection de vibrations (30) ; et
une carte de circuit imprimé (21A) sur laquelle est montée ladite unité de détection de vibrations (30),
**caractérisé en ce que** ladite unité de détection de vibrations (30) possède un ressort hélicoïdal (31) et un fil conducteur (32) passant à travers le ressort hélicoïdal (31), et
ledit ressort hélicoïdal (31) et ledit fil conducteur (32) sont disposés pour s'étendre dans une direction croisant obliquement une direction dans laquelle s'étend ladite carte de circuit imprimé (21A) et une direction orthogonale à ladite carte de circuit imprimé (21A).

6. Feu avant pour une bicyclette selon la revendication 5,
dans lequel ladite unité d'alimentation en énergie électrique (20) comprend une batterie solaire (21) et un mécanisme de stockage électrique (22), et ladite batterie solaire (21) est montée sur ladite carte de circuit imprimé (21A).

7. Feu avant pour une bicyclette selon la revendication 6,
dans lequel ledit mécanisme de stockage électrique (22) comprend un condensateur électrique à deux couches ou un condensateur de polyacène.

8. Feu avant pour une bicyclette selon une des revendications 5 à 7, comprenant en outre une unité de détection d'éclairement lumineux (40) détectant l'éclairement lumineux ambiant,
dans lequel ledit mécanisme de commutation (50) fournit commande de marche/arrêt de connexion électrique entre ledit élément luminescent (10) et ladite unité d'alimentation en énergie électrique (20) en réponse à un résultat détecté par ladite unité de détection de vibrations (30) et un résultat détecté par ladite unité de détection d'éclairement lumineux (40).

9. Feu avant pour une bicyclette selon la revendication 8,
dans lequel ledit mécanisme de commutation (50) établit une connexion électrique entre ledit élément luminescent (10) et ladite unité d'alimentation en énergie électrique (20) en réponse à ladite unité de détection de vibrations (30) détectant que les vibrations continuent pendant une période prédéterminée et ladite unité de détection d'éclairement lumineux (40) détectant que l'éclairement lumineux ambiant n'est pas supérieur à un éclairement lumineux prédéterminé.
